(19) Europäisches Patentamt
European Patent Office
Office européen des brevets

(11) **EP 1 792 278 B1**

(12) **FASCICULE DE BREVET EUROPEEN**

(45) Date de publication et mention
de la délivrance du brevet:
**11.11.2009 Bulletin 2009/46**

(21) Numéro de dépôt: **05787158.4**

(22) Date de dépôt: **19.09.2005**

(51) Int Cl.:
***G06T 7/20*** *(2006.01)*

(86) Numéro de dépôt international:
**PCT/EP2005/054670**

(87) Numéro de publication internationale:
**WO 2006/032650 (30.03.2006 Gazette 2006/13)**

(54) **PROCEDE DE DETECTION ET DE PISTAGE DE CIBLES PONCTUELLES, DANS UN SYSTEME DE SURVEILLANCE OPTRONIQUE**

VERFAHREN ZUR DETEKTION UND NACHVERFOLGUNG VON PUNKTUELLEN ZIELEN IN EINEM OPTOELEKTRONISCHEN ÜBERWACHUNGSSYSTEM

METHOD FOR DETECTING AND TRACKING PUNCTUAL TARGETS, IN AN OPTOELECTRONIC SURVEILLANCE SYSTEM

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **21.09.2004 FR 0409972**

(43) Date de publication de la demande:
**06.06.2007 Bulletin 2007/23**

(73) Titulaire: **THALES
92200 Neuilly sur Seine (FR)**

(72) Inventeurs:
• **KLEIN, Yves
75011 Paris (FR)**
• **MEGAIDES, Vincent
78220 VIROFLAY (FR)**
• **VAN PUYMBROECK LEMPERIERE, Nadège
92130 ISSY LES MOULINEAUX (FR)**

(74) Mandataire: **Esselin, Sophie et al
Marks & Clerk France
Conseils en Propriété Industrielle
Immeuble " Visium "
22, avenue Aristide Briand
94117 Arcueil Cedex (FR)**

(56) Documents cités:
**US-A- 5 432 889**

• **CHUMMUN M R ET AL: "An adaptive early-detection ML/PDA estimator for LO targets with EO sensors'" AEROSPACE CONFERENCE PROCEEDINGS, 2000 IEEE MARCH 18-25, 2000, PISCATAWAY, NJ, USA,IEEE, vol. 3, 18 mars 2000 (2000-03-18), pages 449-464, XP010518713 ISBN: 0-7803-5846-5**
• **ASKAR H ET AL: "Performance analysis of dim moving point target detection algorithms" COMMUNICATIONS, CIRCUITS AND SYSTEMS AND WEST SINO EXPOSITIONS, IEEE 2002 INTERNATIONAL CONFERENCE ON JUNE 29 - JULY 1, 2002, PISCATAWAY, NJ, USA,IEEE, vol. 1, 29 juin 2002 (2002-06-29), pages 605-609, XP010632330 ISBN: 0-7803-7547-5**

**Description**

La présente invention concerne un procédé de détection et de pistage de cibles ponctuelles, dans un système de surveillance optronique, basé sur les observations d'images fournies par des senseurs optroniques, par exemple des senseurs infrarouges. L'invention concerne plus particulièrement un procédé d'association de points singuliers et de création de pistes particulièrement adapté à la veille optronique sectorielle ou panoramique à grande vitesse.

Dans un système de surveillance optronique, le traitement numérique des images a pour objectif d'extraire le signal utile pouvant correspondre à une menace dans une scène observée et d'effectuer un suivi spatial et temporel de cette éventuelle menace. Il comporte ainsi notamment un module de détection, qui permet d'extraire des points singuliers, appelés plots, de la scène optronique observée et un module de pistage qui permet d'associer entre eux des plots extraits, sur des critères spatiaux et temporels : Un ensemble de plots observés à différents instants et associés par le module de pistage, est appelé piste. Chaque piste représente une cible potentielle (un objet réel).

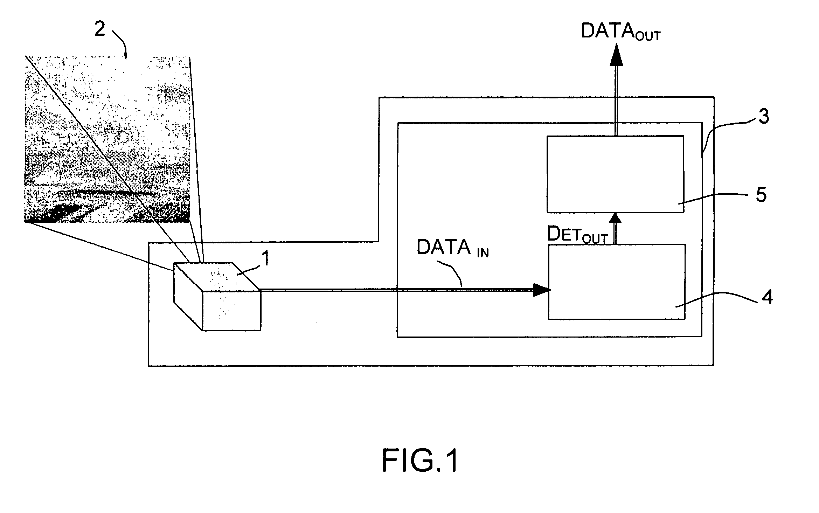

Un exemple d'un tel système de surveillance optronique est illustré à la figure 1. Il est composé de senseur(s) optronique(s) 1 permettant de couvrir le champ de la scène 2 à observer. Ce(s) senseur(s) optronique(s) délivre(nt) à des intervalles de temps réguliers, via une liaison de données, des images Data$_{IN}$ de la scène d'observation 2 à un calculateur 3 de traitement numérique de signal. Ce calculateur applique en temps réel des fonctions algorithmiques sur ces images.

Outre les algorithmes de traitement des images proprement dit (filtrage, restauration de pixels défectueux...) qui sont habituellement prévus, les fonctions algorithmiques réalisées en temps réel par le calculateur 3 sont divisées en deux modules principaux, un module 4 de détection et un module 5 de pistage.

On se place plus particulièrement dans le cadre de la recherche d'une menace dont la surface et les distances d'apparition sont telles qu'elle devrait engendrer une tâche optique sur le senseur optronique de la taille d'un pixel. Dans ce contexte, les fonctions algorithmiques des modules de détection et de pistage sont définies pour des cibles ponctuelles, c'est à dire correspondant à un pixel de l'image. Dans le cas où une cible correspondrait à plusieurs pixels de l'image, des fonctions de réduction (zoom arrière) sont utilisées localement, dans le module de détection, pour se ramener au cas d'une cible ponctuelle. Ces particularités de traitement d'image bien connues de l'homme du métier ne font pas l'objet de l'invention proprement dit, et ne seront donc pas détaillées ici.

Dans le contexte précisé de recherche de cibles ponctuelles, les traitements effectués par le calculateur 3 en temps réel peuvent s'organiser de la façon suivante:

- Le module de détection 4 reçoit des images optroniques de la scène observée fournies par le(s) senseur(s) optronique (s) 1, généralement pré-filtrées. A partir d'une image optronique d'observation DATA$_{IN}$ appliquée en entrée, il extrait de cette image l'ensemble des plots pouvant correspondre spatialement et radiométriquement à une menace, un plot correspondant à un pixel (cible ponctuelle).
- Le module de pistage 5 a pour objet de fournir à un système d'ordre supérieur, tel qu'une interface homme-machine ou un système d'arme, des informations sur une menace potentielle détectée, appelée piste.

La création de pistes consiste à résoudre le problème suivant : quels sont les plots détectés issus d'images observées successives qui ont une origine commune, c'est à dire une même source en mouvement ? Ainsi, en pratique, une piste va se définir comme un ensemble de plots associés dans le temps. De cet ensemble de plots, on déduit un comportement cinématique de la cible, qui permet notamment de prédire son déplacement dans la scène observée.

Plus particulièrement, le module 4 de détection se base habituellement sur une analyse de l'image. Plus précisément, le module de détection peut par exemple procéder à une analyse locale du bruit observé dans l'image (comprenant le bruit propre du senseur et le bruit de la scène proprement dit) pour extraire les plots dont le rapport signal à bruit dépasse un certain seuil. A chaque plot ainsi extrait est associé un certain nombre de caractéristiques ou attributs, comme, par exemple, sa position angulaire et son niveau de signal (niveau radiométrique).

L'utilisation des senseurs optroniques les plus récents, permet une analyse des caractéristiques spatiales et/ou spectrales de l'image (suivant le type d'informations délivrées par le senseur). Ainsi, il est possible d'associer à chaque plot, des informations sur la distribution spatiale et spectrale du fond sur lequel le plot a été extrait. On prévoit pour cela un module de décomposition de l'image qui a pour objectif d'identifier les différentes parties de l'image pouvant présenter des caractères d'homogénéité, de les regrouper en zones homogènes et de déterminer les caractéristiques de chaque zone, en particulier, un niveau de bruit moyen sur la zone et un écart type. Ce sont ces informations qui seront ensuite utilisées pour calculer en chaque point (pixel) de l'image, le rapport signal sur bruit en ce point, rapporté à la portion d'image correspondant à la zone homogène dans lequel ce point se trouve.

Le module de calcul du rapport signal sur bruit en un pixel donné utilise les caractéristiques de la zone homogène Z associée qui caractérise le fond local du pixel considéré : niveau de bruit moyen $m_{Z_j}$ et écart-type $\sigma_{Z_i}$ .

Plus précisément, le calcul du rapport signal sur bruit RSB en un point de l'image consiste à faire le calcul suivant :

$$RSB = \frac{S - m_{Z_i}}{\sigma_{Z_i}}$$

où S est le niveau du signal radiométrique (c'est à dire le niveau de gris) du pixel considéré, et $m_{Z_i}$ et $\sigma_{Z_i}$ la moyenne et l'écart type des signaux radiométriques (typiquement, les niveaux infrarouges) sur la zone homogène $Z_i$ associée à ce pixel.

Le rapport signal sur bruit RSB calculé en chaque pixel de l'image observée est comparé à un seuil de détection prédéterminé $th_d$, pour discriminer les plots pour lesquels on a $RSB \geq th_d$. Les plots qui vérifient cette relation sont les plots détectés. Ces plots détectés peuvent correspondre soit à des objets contrastés de la scène, soit à des pixels entachés de bruit.

En pratique, le seuil de détection prédéterminé $th_d$ est calculé de manière à garantir un couple de probabilités donné de détection et de fausses alarmes pour un pixel présentant un rapport signal sur bruit égal à celui d'une cible en limite de portée. Cette valeur dépend en pratique de la cible que l'on veut détecter et de la portée requise pour cette cible.

En sortie du module de détection, des données de sortie $DET_{OUT}$ sont fournies. Ces données de sortie $DET_{OUT}$ du module de détection sont appliquées en entrée du module de pistage.

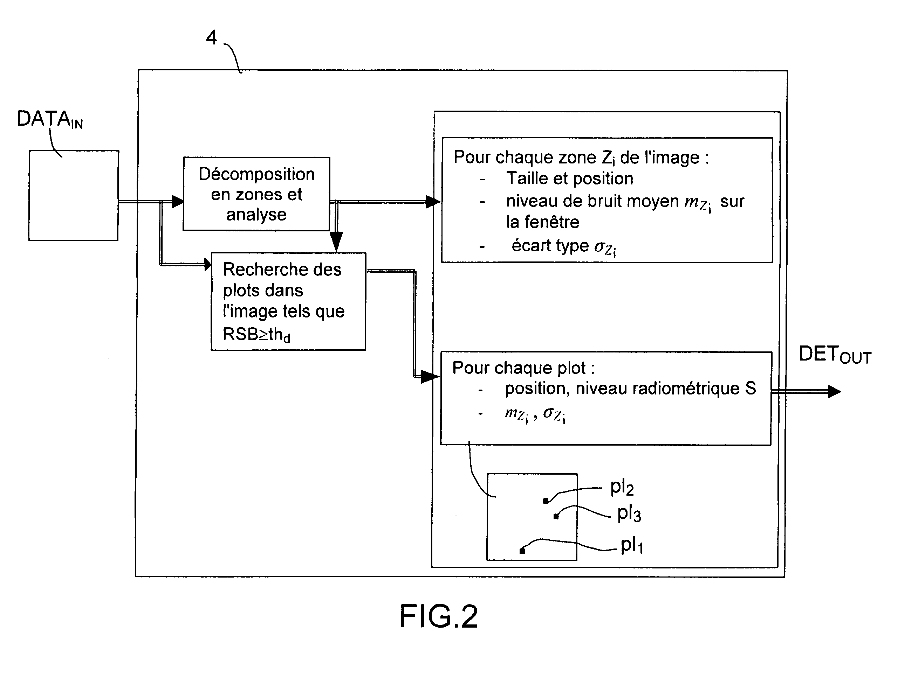

C'est ce qui est représenté de façon schématique sur la figure 2. Au terme de l'étape de décomposition d'image et de recherche des plots, on obtient des plots détectés $pl_1$, $pl_2$, $pl_3$ pour chacun desquels le rapport signal sur bruit RSB calculé sur la zone homogène $Z_i$ associée est supérieur au seuil de détection $th_d$.

A l'issue de cette étape, le module 4 de détection transmet au module 5 de pistage des données $DET_{OUT}$ comprenant la liste des plots détectés, avec pour chaque plot, ses attributs respectifs, notamment : position du plot dans l'image, niveau radiométrique du plot S, moyenne des signaux radiométriques sur la zone homogène Z associée au plot, écart type des signaux radiométriques sur cette zone homogène $Z_i$.

Ces attributs sont notamment utilisés dans le module de pistage, pour associer un plot à une piste hypothèse ou une piste validée, et pour prédire la position de ces pistes dans l'image observée suivante (position, niveau de signal, vitesse, accélération) à partir des attributs de chacun des plots de la piste hypothèse ou validée considérée.

S'agissant du module 5 de pistage, deux processus d'association de plots sont mis en oeuvre : l'association de plots dans le but de valider une hypothèse de piste, et l'association de plots dans le but d'entretenir les pistes validées. Ce sont deux processus qui mettent en oeuvre des algorithmes différents. Au terme de ces deux processus d'association, s'il reste un plot qui n'a pu être associé ni à une hypothèse de piste ni à une piste validée, une nouvelle hypothèse de piste est créée avec ce plot.

L'association d'un plot issu de l'image observée courante avec d'autres plots issus d'observations précédentes, associés entre eux et qui forment une piste hypothèse ou validée, repose de façon générale sur l'existence d'une cohérence temporelle et spatiale entre tous ces plots. Les techniques d'association sont bien connues de l'homme du métier. Elles sont généralement basées sur des critères cinématiques ou spatiaux, par lesquels on détermine un modèle de mouvement commun aux plots.

Ce modèle de mouvement permet de faire une prédiction de la position de la cible. C'est autour de cette position que l'on va chercher le plot correspondant à la détection de la piste à la nouvelle observation. Comme le modèle de mouvement n'est pas parfait et peut changer si la cible manoeuvre, on laisse une certaine latitude au processus d'association pour rechercher un plot autour de la position prédite de la piste. Cette zone de recherche de plot constitue la zone d'association. Sa taille dépend en pratique de la manoeuvrabilité des cibles recherchées, de la fréquence du système, de la vitesse maximale des cibles,....

Le processus d'association et validation consiste en pratique à effectuer les opérations suivantes :

- à la première image, pour chaque plot détecté (dont le rapport signal sur bruit RSB est supérieur ou égal au seuil de détection $th_d$), une piste hypothèse est initialisée avec une vitesse nulle, et des opérations de filtrage sont appliquées pour prédire la position de la cible supposée dans l'image suivante ;
- à l'image suivante, pour chaque piste hypothèse créée, on regarde dans la zone d'association autour de la position prédite à l'étape précédente si un plot a été détecté par le module 3 de détection. Si oui, on applique les opérations de filtrage sur les deux plots associés à cette piste hypothèse, pour mettre à jour le modèle de mouvement et prédire la position de la cible supposée dans l'image suivante ... etc.

Selon l'état de la technique, une piste hypothèse est validée au bout de Q images d'observations successives, si un nombre P de plots ont été associés parmi ces Q observations. Le triplet (P, Q, $th_d$) constitue donc le critère de validation d'une piste hypothèse.

En pratique, les valeurs de P et Q et le seuil de détection $th_d$ sont déterminés pour assurer un couple de probabilité (création de pistes, fausses pistes) prédéterminé, par exemple égal à (90%, 10%) : une piste créée sur ce critère a ainsi 90% de chances de représenter un objet réel (une menace potentielle) présent dans la scène optronique, et 10% de chances d'être une fausse alarme, due à une mauvaise association de plots.

Ainsi, si à la première observation, on détecte un premier plot (RSB≥$th_d$), on crée une piste hypothèse correspondante. Cette piste hypothèse ne sera validée qu'au bout de la Qième observation, si à cette Qième observation, un Pième plot aura pu être associé à cette piste hypothèse. Chacun des P plots associés à la piste hypothèse vérifie RSB≥$th_d$.

Si la piste hypothèse est validée [critère (P, Q, $th_d$) satisfait], les données associées à cette piste validée (position des plots, caractéristiques cinématiques...) sont transmises au système d'ordre supérieur (DATA$_{OUT}$).

En pratique, pour chaque piste hypothèse ou validée, on mémorise l'historique de la piste dans une table informatique, par exemple sur les H dernières observations (avec H>Q). A chaque fois qu'un nouveau plot est associé, les opérations de filtrage sont appliquées sur l'ensemble des plots de la table mise à jour, pour ré-initialiser à chaque fois les paramètres de prédiction (cinématique...)

Dans les systèmes de surveillance reflétant l'état de l'art, le seuil de détection $th_d$ utilisé dans le module de détection pour discriminer les plots de l'image observée et les nombres P et Q utilisés dans le module de pistage pour valider une hypothèse de piste, sont des paramètres système fixés, prédéfinis en fonction des caractéristiques du système de veille et des menaces à surveiller. Les valeurs de ces paramètres système P, Q et $th_d$ sont déterminées pour que les plots détectés, mais qui correspondraient en réalité à du bruit, ne puissent pas servir à valider une piste hypothèse ni à entretenir une piste déjà créée. Ces valeurs P, Q et $th_d$ dépendent donc de la probabilité FA de fausses alarmes en sortie de la détection pour une cible en limite de portée du senseur optronique.

La probabilité de créer h fausses pistes par heure suit une loi de Poisson. Elle s'écrit :

$$P(h) = e^{-m} \frac{m^h}{h!},$$

où m est le nombre moyen de fausses pistes créées par heure.

Ce nombre moyen m de fausses pistes par heure admissibles est relié en pratique au couple (P,Q) ainsi qu'à la valeur FA du taux de fausses alarmes issues de la détection.

En effet, le nombre moyen m de fausses pistes par heure est égal à 3600.f fois le nombre moyen $N_m$ de fausses pistes créées par image (par balayage), f étant la fréquence de balayage de la zone couverte par le système de veille, soit :

$$m = 3600.f.N_m. \ (eq.1)$$

Le nombre moyen $N_m$ de fausses pistes par balayage est égal au nombre $N_{pi}$ de pixels servant à couvrir la zone de balayage, multiplié par la probabilité $P_{fp}$ que ce pixel donne lieu à une fausse piste, soit $N_m = N_{pi} \times P_{fp}$.

Le nombre $N_{pi}$ est connu, fonction du senseur utilisé.

La probabilité $P_{fp}$ qu'un pixel donne lieu à une fausse piste est la probabilité que ce pixel donne lieu à une fausse alarme et que ce pixel soit associé par la suite à au moins P fausses alarmes parmi Q observations du secteur de veille.

Pour déterminer cette probabilité $P_{fp}$, il faut considérer la probabilité FA de fausses alarmes en sortie de la détection, qui s'exprime comme suit :

$$FA = \sum_{i=P-1}^{Q-1} P(i \text{ fausses alarmes sur Q observations}) \qquad (eq.2)$$

La probabilité d'avoir une fausse alarme supplémentaire à associer à une piste existante est la probabilité de l'événement suivant : " En *ouvrant une zone d'association de taille R\*R autour de la position extrapolée de la piste, on trouve au moins une fausse alarme* ". Cet événement est l'événement contraire de " *En ouvrant une zone d'association autour de la position extrapolée de la piste, on ne trouve aucune fausse alarme*", ce qui peut aussi s'exprimer comme suit : "*Aucun des pixels de la zone d'association n'a donné lieu à une fausse alarme*", événement dont la probabilité est (1-FA$^{R*R}$), où R\*R représente la taille de la zone d'association. D'où il vient que la probabilité d'avoir une fausse alarme supplémentaire à associer à une piste existante est égale à 1-(1-FA$^{R*R}$).

La probabilité de l'événement "*obtenir i fausses alarmes sur Q-1 observations*" est la probabilité d'obtenir i fois "*une fausse alarme supplémentaire à associer à une piste existante*" et (Q-1-i) fois "*aucune fausse alarme dans la zone d'association*".

Cette probabilité est donc égale à $C_{Q-1}^{i}\left(1-(1-FA)^{R*R}\right)^{i}.(1-FA)^{R*R(Q-1-i)}$ , où $C_{Q-1}{}^{i}$ désigne le nombre de combinaisons de i éléments parmi Q-1.

D'où il vient

$$P_{fp}= \sum_{i=P-1}^{Q-1} C_{Q-1}^{i}\left(1-(1-FA)^{R^2}\right)^{i}.(1-FA)^{R^2(Q-1-i)}.$$

Partant de $m=3600.f.N_{pi}.P_{fp}$, on a donc :

$$m=3600.f \cdot FA \cdot N_{pi} \cdot \sum_{i=P-1}^{Q-1} C_{Q-1}^{i}\left(1-(1-FA)^{R^2}\right)^{i}.(1-FA)^{R^2(Q-1-i)} \quad (eq.3).$$

Cette relation entre le nombre moyen m de fausses pistes par heure admissibles et le couple (P,Q) ainsi qu'à la valeur FA du taux de fausses alarmes issues de la détection, permet donc, en fixant Q comme le nombre maximal d'observations admissibles avant de prendre une décision de création de piste (Ce qui correspond au temps de retard admissible pour les traitements), de trouver les paramètres FA et P qui permettront de garantir un taux de création de fausses pistes donné. Cette formule montre par exemple que si on choisit, pour un taux de fausses pistes donné, de diminuer la valeur de P, les contraintes sur l'association d'alarmes pour la création de pistes diminuent. Alors il va falloir diminuer la valeur du taux de fausses alarmes FA pour diminuer le taux de fausses alarmes en sortie de détection. Au contraire, si on augmente P, on va pouvoir se permettre d'augmenter le taux de fausses alarmes, puisque l'on est devenu plus exigeant sur le nombre d'alarmes nécessaires pour créer des pistes.

Un problème rencontré dans l'étage de traitement de pistage, réside dans la complexité du fond de la scène optronique dans lequel la cible se déplace. Par exemple, dans le cas d'une piste hypothèse validée, si la cible passe dans une zone complexe, elle peut ne pas être détectée dans l'image correspondante. En effet, le signal radiométrique d'une cible est à priori constant. Le rapport signal sur bruit d'une cible ponctuelle dans une zone complexe a donc tendance à diminuer. S'il devient inférieur au seuil de détection th$_d$, la cible ne sera pas détectée sur un tel fond complexe. Or s'il n'y a pas de détection de la cible ponctuelle dans l'image courante, les attributs de cinématique (opérations de filtrage) vont être modifiés de façon erronée et la prédiction sera elle-même erronée. Il y a risque de décrochage de cible. Ce problème de décrochage peut aussi se poser si la cible passe en limite de portée du senseur optronique : son signal radiométrique devient plus faible. Le rapport signal sur bruit diminue aussi.

Un objet de l'invention est ainsi de rendre plus robuste le processus d'association, pour éviter les problèmes de décrochage.

Un autre problème rencontré avec le module de pistage, réside dans le temps nécessaire à la validation des pistes hypothèses. En effet, il est souhaitable de valider une piste le plus rapidement possible, tout en satisfaisant aux impératifs de probabilité de fausses alarmes, qui doit rester faible. Or, pour un seuil de détection prédéterminé th$_d$, si on considère un fond simple, uniforme, la probabilité de fausses alarmes est plus faible que dans le cas d'un fond complexe. Or le module de pistage de l'état de la technique applique un critère prédéfini, fixe, qui nécessite de faire au moins Q observations, et d'avoir associé P plots sur ces Q observations pour valider une piste.

Si on peut réduire ce nombre d'observations au moins dans certains cas d'observations favorables, on réduit avantageusement l'écart temporel entre la détection (du premier plot) et la mise en piste : on améliore ainsi la réactivité du senseur. Dans le cas où la cible se rapproche du senseur optronique, cela équivaut à une amélioration de la portée du système de surveillance.

Une idée à la base de l'invention est de rendre le pistage adaptatif.

Il est connu notamment du document de Chummun M R et al, "An adaptative early detection ML/PDA estimator for LO targets with EO sensors" Aerospace proceedings, 2000 IEEE March 18-25, 2000, Piscataway, NJ, USA, IEEE vol.3, 18 mars 2000, pages 449-464, XP10518713, ISBN:0-7803-5846-5, d'estimer à chaque nouvelle image, un seuil de détection en fonction d'un rapport signal sur bruit estimé dans le but de limiter les fausses alarmes. Cependant cette adaptation pénalise la probabilité de détection de cibles entrantes, et ne concerne pas le pistage.

Selon l'invention, à chaque nouveau plot détecté, on détermine un seuil ou une pluralité de seuils de comparaison associés à ce plot, supérieurs ou égaux au seuil de détection et on applique un critère de validation de la piste hypothèse associée, fonction des seuils de comparaison associés aux plots de la piste hypothèse.

A chaque nouveau plot associé à une piste, on regarde si un critère de validation de piste est vérifié relativement au seuil ou à la pluralité de seuils associés à chaque plot de la piste. Ainsi, on passe d'un critère figé (P, Q, $th_d$) à un critère adaptatif, dans lequel, par l'utilisation de seuils adaptés, les valeurs P et Q peuvent varier selon les conditions d'observation.

Ainsi, telle que caractérisée, l'invention concerne un procédé de traitement d'images optronique, pour assurer la détection de cibles ponctuelles et le suivi de la piste de chaque cible détectée dans lesdites images, comprenant une étape de comparaison en chaque pixel d'une image observée, pour comparer le rapport signal sur bruit à un seuil de détection ($th_d$) et une étape de création de pistes hypothèses, chaque piste hypothèse comprenant au moins un plot détecté, **caractérisé en ce que** pour chaque plot détecté, il comprend une étape de détermination d'un ensemble de seuils de comparaison associé au dit plot, ledit ensemble comprenant un seuil ou une pluralité de seuils de comparaison, lesdits seuils de comparaison étant supérieurs ou égaux au dit seuil de détection ($th_d$), et une étape d'application d'un critère de validation de la piste hypothèse associée au dit plot, ledit critère de validation étant fonction des seuils de comparaison de chacun des plots de la piste hypothèse.

Selon un aspect de l'invention, lesdits seuils de comparaison sont déterminés en fonction de la complexité du fond local du plot considéré.

L'introduction d'un critère adaptatif de validation en fonction du fond local permet d'adapter l'algorithme de traitement aux conditions de détection rencontrées dans les différentes zones des images fournies par les senseurs de veille optronique.

Selon un aspect de l'invention, lesdits seuils de comparaison associés au plot détecté sont déterminés en fonction du nombre de plots déjà associés à la piste hypothèse considérée.

Les performances sont encore améliorées en prévoyant l'adaptation du critère en fonction du nombre de plots de la piste sur lequel il est appliqué. On détermine alors pour chaque plot un seuil de comparaison applicable en fonction du nombre i de plots de la piste hypothèse sur lesquels on applique le critère de validation.

Si la piste hypothèse comprend p plots, le critère de validation consiste à vérifier s'il existe i plots, i=1 à p, tels que pour chacun des i plots, le rapport signal sur bruit du plot est supérieur à seuil de comparaison applicable pour i plots.

Notamment, si un plot détecté est à très fort RSB, supérieur au seuil de détection de comparaison pour un plot qui lui aura été associé selon l'invention, alors la piste sera validée par application du critère de validation sur ce seul plot, indépendamment des rapports signal sur bruit des autres plots. La réactivité d'un système de veille mettant en oeuvre un procédé selon l'invention s'en trouve sensiblement améliorée.

De préférence, on modélise la complexité du fond local sur lequel est détecté un plot, et on pré-calcule les ensembles de seuils de comparaison, pour chaque modèle. De cette façon, la mise en oeuvre d'un procédé selon l'invention est facilitée. En outre, le pré-calcul des ensembles de détection à appliquer permet un traitement d'un algorithme de pistage selon l'invention plus rapide, adapté à des cadences images élevées.

Selon un autre mode de réalisation de l'invention qui peut être combiné au précédent, on utilise un critère adaptatif dans le processus d'association de plots pour le suivi (l'entretien) des pistes validées. Selon ce mode de réalisation, à chaque nouvelle observation, ce critère adaptatif sera utilisé lorsque le module de détection n'aura fourni aucun plot dans la zone d'association prédite pour la piste validée considérée, pour cette nouvelle observation. Ce critère permet la détection de plots fantômes, par abaissement du seuil de détection dans la zone d'association considérée. Ces plots fantômes vont avantageusement permettre de ne pas décrocher de la cible en cas de traversée d'une zone d'image complexe. Ici, en fonction des caractéristiques du fond local sur lequel on prédit la future position de la cible correspondant à la piste validée considérée, on commande le module de détection avec un seuil de détection inférieur au seuil de détection nominal $th_d$, pour obtenir une probabilité de détection dans cette zone proche de 100%. Cet aspect de l'invention repose sur le fait que la piste étant validée, la probabilité de fausse alarme a été diminuée de façon significative.

D'autres avantages et caractéristiques de l'invention apparaîtront plus clairement à la lecture de la description qui suit, faite à titre indicatif et non limitatif de l'invention et en référence aux dessins annexés, dans lesquels :

- la figure 1 déjà décrite est un schéma-bloc d'un système de veille optronique;
- la figure 2 déjà décrite est un schéma-bloc d'un module de détection 4 selon l'état de la technique sur des données image $DATA_{IN}$ appliquées en entrée,
- la figure 3 illustre le processus d'un module de pistage 5 utilisant des critères adaptatifs selon l'invention,
- la figure 4 met en évidence les processus adaptatifs selon l'invention, dans les modules de détection et de pistage;
- la figure 5 illustre un ensemble de seuils de détection définis en fonction du niveau de complexité du fond local selon l'invention ;
- les figures 6 et 7 sont des représentations des courbes de densité de probabilité de détection, relativement au bruit capteur et un signal de cible, selon la complexité du fond local sur lequel évolue la cible.

Selon l'invention, à chaque fois qu'un plot est détecté dans une observation courante, on définit un seuil ou une pluralité de seuils de comparaison applicables comme critère de validation de piste, permettant à la fois de garantir un taux de détection de cible et de fausse alarme, et de valider rapidement une piste dans des conditions favorables, lorsque la cible se déplace sur un fond simple ou peu complexe. Ainsi, on améliore les performances du système en terme de réactivité, tout en satisfaisant au critère de fiabilité du système (taux de détection, taux de fausse alarme).

Plus particulièrement, selon un aspect de l'invention, on définit ces seuils de comparaison, par calcul, en fonction des caractéristiques radiométriques du fond local sur lequel a été détecté le plot, et des courbes de probabilité de détection et de fausses alarmes pour ce plot.

Si on reprend la figure 2, on prévoit ainsi que le module de détection fournit à chaque nouvelle observation :

- l'ensemble des zones homogènes Z de l'image, avec les attributs de chaque zone, typiquement au moins sa position, sa taille, le niveau de bruit moyen $m_{z_i}$ et l'écart type $\sigma_{z_i}$ des niveaux radiométriques sur la zone $Z_i$ ;
- l'ensemble des plots détectés avec les attributs de chaque plot (position, niveau radiométrique S, niveau de bruit moyen $m_{z_i}$ et écart type $\sigma_{z_i}$ des niveaux radiométriques sur la zone $Z_i$);

Ainsi, à chaque fois qu'un plot a été détecté dans une nouvelle observation, on est capable de déterminer un ensemble de seuils de comparaison (un seuil ou une pluralité de seuils), en fonction des caractéristiques radiométriques de la zone homogène sur lequel le plot a été détecté, et à appliquer un critère de validation de la piste hypothèse associée $PH_i$, fonction des seuils de comparaison associés à chacun des plots de cette piste. Typiquement, ces seuils sont déterminés en exploitant l'équation (eq.3). Pour chaque piste dont on connaît le nombre Q d'observations et P de détections actuelles, on calcule le taux de fausses alarmes nécessaire pour assurer le taux de fausses pistes requis. On en déduit le seuil $th_d$ permettant d'obtenir ce taux de fausses alarmes. Si les détections ayant servi à créer la piste ont dépassé ce seuil, alors la décision de création de la piste est prise immédiatement.

Plus précisément le critère adaptatif selon l'invention, consiste à regarder s'il existe i plots, parmi les p plots de la piste pour lesquels leur rapport signal sur bruit est supérieur ou égal à un seuil de comparaison défini pour i plots. Ainsi, la piste hypothèse peut être validée au bout de 1, 2, ...p plots, ou non validée, selon les conditions d'observation.

Ce critère est adaptatif et dynamique, car il est ré-évalué à chaque fois qu'un nouveau plot est associé à la piste hypothèse :

- en fonction de la zone homogène sur lequel il aura été détecté, la cible se déplaçant, d'une observation à l'autre on peut ne pas être du tout sur le même type de fond ; donc la complexité peut varier.
- En fonction du nombre q d'observations effectuées, comptabilisées. Les seuils ne sont pas aussi sélectifs si on en est à la 10^ème observation que si on est à la première, ce qui est lié à la loi statistique de probabilité de détection.
- En fonction du nombre p de plots associés à la piste hypothèse considérée : pour un nombre q d'observations prédéterminé, les seuils sont moins sélectifs selon que l'on considère 4 plots

ou un seul plot, ce qui est lié à la loi statistique de probabilité de détection.

Cela permet donc d'augmenter la réactivité sur les alarmes dont le rapport signal sur bruit est élevé et qui ont donc plus de probabilité de dépasser des seuils $th_d$ associés à une mise en piste plus rapide.

On a ainsi un procédé de validation adaptatif et dynamique, qui permet la mise en piste rapide (i.e., la validation de piste hypothèse) dans le cas de plots à forts RSB, tout en permettant toujours la mise en piste dans le cas de plots à faible RSB. En d'autres termes, le délai de mise en piste est fonction du contraste du pixel. La réactivité du système est donc améliorée. Notamment, le procédé décrit permet une mise en piste rapide des objets plus proches du senseur que la portée limite.

Ce processus de validation d'une piste hypothèse selon l'invention est déclenché à chaque nouvelle observation, si dans cette observation, un nouveau plot a été associé à cette piste hypothèse. Ce procédé nécessite de déterminer les seuils de comparaison associés à chaque plot détecté dans l'image. Ces seuils sont déterminés à partir des caractéristiques radiométriques associées à la zone homogène sur laquelle le plot a été détecté, et ce pour chaque plot et à chaque nouvelle image. Ils sont aussi déterminés en fonction du nombre de plots que l'on considère pour vérifier le critère.

En pratique la détermination des caractéristiques radiométriques du fond local pour définir les seuils de comparaison applicables pour chaque plot détecté peut être plus ou moins facilitée selon le mode de décomposition de l'image en zones homogènes.

Une méthode connue de décomposition d'une image en zones homogènes utilise comme critère de définition d'une zone homogène, un même niveau radiométrique (niveau de gris) en chaque pixel de la zone. Selon cette méthode, on établit une sorte de radiographie de l'image observée, comme représenté schématiquement dans le tableau ci-dessous :

On a ainsi une partition de l'image en zones homogènes, de même niveau de signal (niveau de gris), sur lesquelles on fait des calculs de bruit moyen et d'écart type.

Puis, pour chaque plot détecté, on regarde dans quelle zone homogène de cette radiographie ce plot se trouve, pour calculer un rapport signal sur bruit correspondant.

Selon l'invention, on définit alors un seuil ou une pluralité de seuils en fonction du fond local défini par la zone homogène sur laquelle le plot a été détecté. Cependant, une telle méthode nécessite des temps de calculs supplémentaires à mettre en oeuvre pour chaque plot détecté.

Selon un mode de réalisation préféré, le mode de décomposition de l'image en zones homogènes permet une modélisation de la complexité du fond local. Dans ce mode de réalisation préféré, on utilise un critère de plus grand voisinage uniforme autour de chaque pixel. Ainsi, dans cette méthode, on part du pixel, pour déterminer les zones homogènes dans l'i mage.

Un critère d'uniformité peut se définir à partir d'une fonction de distribution radiométrique. Par exemple, il peut se définir à partir de l'écart-type : une zone uniforme est alors une zone sur laquelle l'écart type du niveau radiométrique est constant, égal au niveau de bruit du senseur optronique. On peut aussi intégrer dans la définition des notions de rampes de niveaux.

Selon une telle décomposition en zones homogènes, il s'agit alors de déterminer en chaque pixel de l'image, la zone homogène $Z_i$ qui est la plus grande zone de voisinage uniforme autour de ce pixel : c'est la zone la plus grande autour du pixel, hors le pixel lui-même, sur laquelle le critère d'uniformité est vérifié. Les traitements algorithmiques associés à cette méthode de décomposition d'image en zones homogènes sont bien connus de l'homme du métier et ne seront pas détaillés.

En pratique, on peut modéliser cette décomposition en utilisant des tailles $TF_k$ de fenêtres comprises entre une taille maximum $TF_1$ et une taille minimum $TF_t$. La décomposition consiste alors à regarder en chaque pixel, quelle taille de fenêtre répond au critère de plus grand voisinage uniforme. Plus précisément, la méthode de décomposition de l'image consiste en chaque pixel à ouvrir la fenêtre de taille maximum (ou optimum) $TF_1$ autour du pixel, et à y appliquer les calculs de critère d'uniformité sur la zone d'image dans la fenêtre. Si le critère d'uniformité se vérifie dans cette zone, c'est qu'elle est la zone de voisinage local uniforme la plus grande au sens précisé ci-dessus. Sinon, on réduit la taille de fenêtre autour du pixel et ainsi de suite, jusqu'à la plus petite taille de fenêtre $TF_t$ définie.

Au terme de cette phase de décomposition, chaque pixel est ainsi associé à une taille $TF_k$ de fenêtre. La zone homogène Z en chaque pixel est ainsi définie par une taille de fenêtre $TF_k$, et le calcul du rapport signal sur bruit RSB en un pixel donné de l'image est effectué relativement à cette zone.

Cette décomposition basée sur un critère de distribution radiométrique uniforme permet de faire correspondre à chaque taille $TF_k$ de fenêtre, k variant de 1 à t, un critère k de complexité de fond local. Si on utilise t tailles de fenêtre, on a ainsi un critère de complexité variant de 1 à t. Par convention, on a noté $TF_1$ la plus grande taille de fenêtre et $TF_t$ la plus petite taille de fenêtre. Avec cette convention, obtenir une fenêtre de taille maximum $TF_1$, signifie que le pixel considéré se situe dans une région simple de la scène observée et obtenir une fenêtre de taille minimum $TF_t$, signifie que le pixel considéré se situe dans une région complexe de la scène observée. Dans une telle région, la probabilité de détection de plots est beaucoup plus faible que dans une région simple.

Au terme de cette phase de découpage, chaque pixel est ainsi associé à une taille $TF_k$ de fenêtre dans l'image observée. Cette taille $TF_k$ de fenêtre définit la zone homogène $Z_i$ ($Z_i$ est égal à la fenêtre de taille $TF_k$ centrée sur le

pixel considéré). On comprend que l'on trouvera les zones homogènes les plus grandes dans les régions "simples" de la scène observée correspondant à des champs, des forêts...et les zones homogènes les plus petites, dans les régions "complexes" : routes, lisières...

On a ainsi modélisé la complexité du fond de l'image par des tailles de fenêtre.

Selon un mode de réalisation préféré de l'invention, cette modélisation permet de prédéfinir les seuils de comparaison associés aux plots détectés, en fonction de la taille de la zone homogène associée à chaque plot.

Dans une mise en oeuvre préférée de l'invention, on utilise un système de surveillance optronique qui utilise un découpage de l'image en zones homogènes, basé sur un critère de distribution radiométrique uniforme, ledit critère étant appliqué en chaque pixel de l'image observée pour déterminer la plus grande taille de fenêtre appliquée autour dudit pixel sur laquelle ledit critère est vérifié.

Dans ce contexte, le niveau k de complexité du fond associé à un plot détecté est donné par la taille de la fenêtre associée à ce plot, d'après ce découpage. On peut ainsi quantifier la complexité d'un fond local sur k niveaux, correspondants aux k tailles de fenêtre du critère de distribution uniforme.

Chaque fenêtre représentant un fond uniforme, la densité de probabilité de détection sur cette fenêtre est uniquement liée au bruit capteur et au signal cible.

L'utilisation d'un modèle de fenêtres "normalisées" pour représenter la complexité du fond permet la connaissance à priori des courbes de densité de probabilité de détection et de fausses alarmes, pour chaque taille de fenêtre. En effet, quand on est sur un fond uniforme, la densité de probabilité de détection est une gaussienne dont les paramètres sont uniquement liés au bruit capteur et au signal cible. On peut donc la déterminer statistiquement. C'est ce qui est utilisé pour pré-déterminer un ensemble $E_k$ de seuils de comparaison applicables pour chaque niveau quantifié k de complexité du fond.

La mise en oeuvre du critère adaptatif, consiste alors à simplement indexer l'ensemble de seuils de comparaison applicable au nouveau plot détecté, sur la taille $TF_k$ ou sur le critère k de complexité de la zone homogène associée, puis à appliquer le critère de validation sur la piste hypothèse correspondante en sélectionnant les ensembles de seuils de comparaison ainsi indexés des plots de la piste hypothèse.

Ainsi, on est capable de décider de la validation d'une piste à chaque fois qu'un nouveau plot est détecté, et ce, en assurant la fiabilité du système (taux de détection et taux de fausses alarmes).

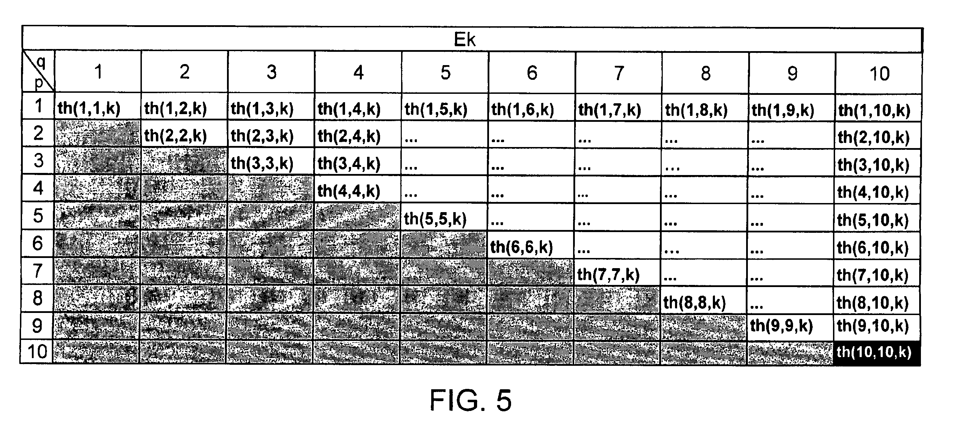

Sur la figure 5, on donne une représentation d'un ensemble $E_k$ de seuils de comparaison déterminés en fonction du niveau k de complexité du fond local selon l'invention.

Comme on le voit clairement sur cette figure 5, chaque ensemble $E_k$ comprend $\dfrac{P \times Q}{2}$ seuils $th_{i,j,k}$, avec i=1 à P et j=1 à Q, avec i≤j, et où P est le nombre maximum de plots associés et Q le nombre maximum d'observations. En pratique, on a P=Q.

Chaque ensemble $E_k$ se structure sous forme d'une table à deux entrées, qui définit, pour un nombre q d'observations courantes (c'est à dire déjà effectuées, y compris l'observation courante), un sous ensemble $T_{q,k}$ de q seuils de comparaison $th_{i,q,k}$, i=1 à q,

avec $th_{1,q,k} > th_{2,q,k} > th_{3,q,k} > .... > th_{i,q,k} > ... > th_{q,q,k}$ (pour un nombre q d'observations donné, les seuils sont moins sélectifs si l'on considère 4 plots que si l'on considère un seul plot, ce qui lié à la loi statistique de probabilité de détection).

On peut ainsi écrire :

$$E_k = \left\{ T_{1,k} = \left\{ th_{1,1,k} \right\}, T_{2,k} = \left\{ th_{1,2,k}, th_{2,2,k} \right\} \cdots T_{j,k} = \left\{ th_{1,j,k}, \ldots th_{j,j,k} \right\}, \ldots, T_{Q,k} = \left\{ th_{1,Q,k}, \ldots th_{Q,Q,k} \right\} \right\},$$

ce qui correspond dans le tableau de la figure 5 aux colonnes.

Dans chaque ensemble $E_k$, on a aussi (sur chaque ligne, dans le tableau de la figure 5) : $th_{p,1,k} \leq th_{p,2,k} .... \leq th_{p,Q,k}$, (pour un nombre p de plots considéré, les seuils ne sont pas aussi sélectifs si on en est à la 10ème observation que si on est à la première, lié à la loi statistique de probabilité de détection).

Dans cette représentation :

- le niveau k de complexité de la zone sur laquelle un plot a été détecté est utilisé comme pointeur sur l'ensemble $E_k$ de seuils à utiliser pour ce plot dans le processus de validation ;
- le nombre q d'observations effectuées depuis le premier plot associé de la piste hypothèse considérée, est utilisé comme pointeur pour sélectionner le sous-ensemble de seuils $T_{q,k}$ dans l'ensemble $E_k$ et
- le nombre p de plots associés à la piste hypothèse est utilisé comme pointeur pour sélectionner les p premiers seuils de ce sous-ensemble, soit : $\{th_{1,q,k}, th_{2,q,k}, ..., th_{p,q,k}\}$.

Ces seuils forment en réalité un multi-critère de validation, car ils sont tous à considérer successivement, en commençant par le premier, $th_{1,q,k}$. Tous les seuils sont ainsi passés successivement en revue jusqu'au dernier, sauf à trouver une valeur de $i{\leq}p$, pour lequel le critère de validation est vérifié c'est à dire s'il existe i plots parmi les p plots associés de la piste hypothèse tel que chacun des i plots a son RSB qui vérifie : $RSB \geq th_{i,q,k}$ pour sa valeur de k associée.

Dans un exemple donné à titre illustratif de l'invention, le processus de validation mis en oeuvre par le module de pistage peut être comme suit, en reprenant les notations suivantes : on est à la q-ième observation pour la piste hypothèse PH (c'est à dire la q-ième observation depuis qu'un premier plot a été associé à la piste hypothèse, soit, depuis que la piste hypothèse a été créée) et lors de cette q-ième observation, un p-ième plot est associé à cette piste hypothèse. On a $p{\leq}q$.

Un attribut de chacun des p plots associés à la piste hypothèse $PH_i$, est le niveau k de complexité de la zone homogène sur laquelle ce plot a été détecté.

Selon l'invention, le module de pistage consiste :

①-Dans les ensembles $E_k$ de seuils de comparaison applicables, indexés par les niveaux de complexité k associés aux p plots de la piste hypothèse considérée, à sélectionner les sous-ensembles indexés par le nombre q d'observations courantes, c'est à dire les sous-ensembles

$$T_{q,k} = \{ th_{1,q,k}, \ldots th_{q,q,k} \}.$$

②-A initialiser une boucle de comparaison avec i=1, cette boucle consistant dans les étapes suivantes :

-a). Sélection des seuils $th_i,q,_k$ d'index i dans les sous-ensembles $T_{q,k}$ et vérification du critère suivant :

■ S'il existe i plots parmi les p plots de la piste hypothèse PHI tels que chaque plot parmi ces i plots vérifie l'inégalité suivante : $RSB \geq th_{i,q,k}$ pour la valeur du niveau de complexité k associé à ce plot.

• Alors la piste est validée - fin de la boucle.

■ si non, étape b).

-b). i=i+1.

■ Tant que i≤p, retour à l'étape a).
■ Sinon, étape c).

-c).si i>p, Alors la piste n'est pas validée - fin de boucle.

On suppose par exemple que q=4. Si on suppose que les deux premiers plots de la piste hypothèse ont un attribut k associé égal à 2, et que les deux autres plots de la piste hypothèse ont un attribut k associé égal à 3, on sélectionne donc dans l'ensemble $E_2$, le sous-ensemble $T_{4,2}$ qui comprend les seuils suivants (figure 5) : $th_{1,4,2} > th_{2,4,2} > th_{3,4,2} > th_{4,4,2}$. On sélectionne également le sous-ensemble $T_{4,3}$ qui comprend les seuils suivants (figure 5) : $th_{1,4,3} > th_{2,4,3} > th_{3,4,3} > th_{4,4,3}$.
Dans un exemple, on a

$$th_{1,4,2} \approx =8,3 > th_{2,4,2} \approx 5,5 > th_{3,4,2} \approx 4,4 > th_{4,4,2} \approx 3,7.$$

$$th_{1,4,3} \approx 9 > th_{2,4,3} \approx 6 > th_{3,4,3} \approx 4,6 > th_{4,4,3} \approx 3,8.$$

Le processus de validation de la piste à la q=4-ième observation, est de regarder :

- si un plot parmi les p plots associés vérifie $RSB{\leq}th_{1,4,k}$ pour sa valeur de k associée ; si oui, la piste est validée. Sinon, à regarder :

- si p≥2, si deux plots parmi les p plots associés vérifient chacun $RSB{\leq}th_{2,4,k}$ pour leur valeur de k respective : si oui, la piste est validée. Sinon, à regarder :

- si p≥3, si trois plots parmi les p plots associés vérifient chacun RSB≤$th_{3,4,k}$ pour leur valeur de k respective : si oui, la piste est validée. Sinon, à regarder :

- si p≥4, si quatre plots parmi les p plots associés vérifient chacun RSB≤$th_{4,4,k}$ pour leur valeur de k respective : si oui, la piste est validée.

Sinon, la piste n'est pas validée.

Par exemple, dans le cas de la piste hypothèse décrite, si le deuxième plot (k = 2) a un RSB supérieur à 5,5 et si le troisième plot (k=3) a un RSB supérieur à 6, tous deux remplissent les conditions pour une création de piste à P=2 sur leurs niveaux k de complexité respectifs, et donc la piste peut être créée.

On comprend que l'on obtient la mise en piste beaucoup plus rapidement que dans le cas du critère figé (P, Q,$th_d$) habituellement utilisé dans l'état de la technique.

Dans un perfectionnement de l'invention, si lors d'une observation, aucun plot n'est associé à la piste hypothèse PH, on compare le couple (p,q) associé à la piste (c'est à dire que le nombre p d'observations effectuées depuis le premier plot associé, et le nombre q de plots associés). Si ce couple est proche des valeurs maximums (P,Q) établies dans le processus de validation, alors on regarde le niveau de complexité associé à la zone de prédiction de la piste hypothèse. Si cette prédiction amène sur un fond complexe, alors on décide de la validation de la piste hypothèse. Ce sera typiquement le cas si l'on a un niveau de complexité k dans la zone de prédiction égal à t ou t-1 (correspondant à la taille de fenêtre minimum), selon la convention de modélisation retenue. Ainsi, en d'autres termes, dans le cas où aucun plot n'est détecté dans l'image observée courante pour une piste hypothèse donnée, on prévoit une étape de comparaison du couple (p,q) du nombre p de plots d'une piste hypothèse et d'un nombre q d'observations effectuées depuis le premier plot associé à la dite piste hypothèse, à un couple optimum (P,Q), pour valider ladite piste hypothèse en fonction de la différence entre ces deux couples (p,q) et (P,Q) et en fonction du niveau de complexité k associé à la zone de prédiction de position de plot dans l'image courante.

Pour illustrer ce propos, si on a (P,Q)=(10,10), un tel perfectionnement pourra être mis en oeuvre avec (p,q) =(8,9) par exemple.

Selon un autre aspect de l'invention, le niveau de complexité k est encore utilisé pour rendre adaptatif le processus d'association de plots à une piste validée. Il s'agit ici d'assurer le suivi de la piste, c'est à dire l'accrochage de la cible.

Une cible donnée a un signal radiométrique qui reste constant au premier ordre. Ainsi, si la trajectoire de cette cible passe sur des fonds simples et complexes, le rapport signal à bruit de cette cible va varier fortement. Dans des zones complexes, il peut être trop faible pour être détecté par le module de détection.

On rappelle que le module de détection applique un seuil de détection fixe $th_d$. En pratique ce seuil fixe $th_d$ correspond au seuil minimum des tables $E_k$, qui sera donné par le seuil $th_{Q,Q,1}$ de la table $E_1$ (correspondant à un fond simple).

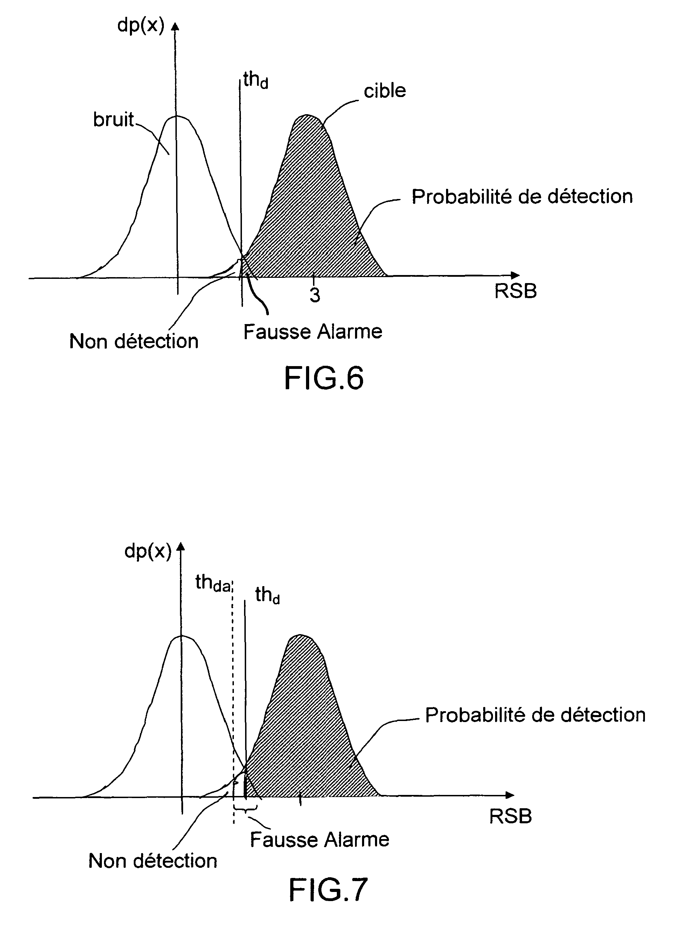

La figure 6 représente les densités de probabilité de détection dp(x), pour une cible et pour le bruit, en fonction du rapport signal sur bruit, pour une fenêtre de taille donnée.

A fenêtre de taille constante, la probabilité de détection est l'aire sous la courbe dp(x) de la cible, délimitée à gauche par la droite verticale correspondant au seuil de détection $th_d$ du module de détection, ce qui s'écrit

$$p(\det) = \int_{th_d}^{\infty} dp(x)_{cible} \cdot$$ $th_d$ est choisi pour que p(det)=90%.

La probabilité de fausse alarme est donnée par l'aire délimitée à gauche par le seuil de détection $th_d$ et la portion de courbe de densité de probabilité du bruit à droite.

Maintenant, si la cible passe sur un fond plus complexe, la taille de la fenêtre varie. Cela se traduit par une courbe de densité de probabilité de détection de cible qui se décale vers la gauche comme représenté en pointillé sur la figure 7. Pour maintenir la même probabilité de détection, il faut alors diminuer le seuil de détection. Dans le calcul d'aire, cela revient à ajouter la portion "a" de surface grisée sous la courbe de densité de probabilité de détection de cible, c'est à dire $$a = \int_{th_{da}}^{th_d} dp(x)_{cible} \cdot$$ Ce seuil est noté $th_{da}$ sur la figure 7. Il est choisi pour que la probabilité de détection de la cible reste de 90%.

On voit, que ce faisant, la probabilité de fausse alarme augmente dans le même temps.

L'idée est donc, dans le cas d'une piste validée, de commander dans le module de détection un abaissement local du seuil de détection, dans le cas d'un fond local complexe, si le module de détection qui applique le seuil figé $th_d$ de détection n'a pas permis de détecter un plot correspondant à cette piste validée, dans la zone de prédiction. En adaptant localement le seuil de détection, on permet la détection d'un plot que l'on nomme plot fantôme. Ce principe n'est pas du tout applicable à la détection de plots pour les pistes hypothèses, car dans le cas des pistes hypothèses, on augmenterait alors la probabilité de fausse alarme, ce qui n'est pas recherché.

En pratique, une mise en oeuvre du procédé selon l'invention comprend deux aspects : un aspect prédiction et un aspect détection.

Dans cette mise en oeuvre, lorsqu'un nouveau plot a été associé à la piste validée considérée $PV_i$ :

- le module de prédiction calcule pour cette piste validée $PV_i$, la position que devrait avoir le plot de la cible dans l'image observée suivante, mais aussi, dans quelle zone de l'image ce plot devrait se trouver. Il peut faire cette prédiction puisqu'il dispose en entrée de la position du plot et de la zone homogène associée dans lequel il se trouve dans l'image courante. Il peut à partir de cette prédiction, et en utilisant les attributs du plot associé à la piste validée dans l'image courante, de la zone associée et de la zone de prédiction dans l'image observée suivante, en déduire le cas échéant la future perte de contraste de la cible en fonction de la cinématique associée à la cible. Si la cible se déplace d'une zone simple vers une zone plus complexe, on pourra ainsi prédire le RSB du plot que l'on devra détecter dans l'image suivante.

- à l'observation suivante, le module d'association de plots aux pistes validées, ouvre une zone d'association autour de la prédiction de position de plot pour chaque piste validée. On rappelle que la zone d'association est la zone de recherche d'un plot, fonction du modèle de mouvement associé à la piste. Le modèle de mouvement permet en effet de faire une prédiction de la future position de la cible. C'est autour de cette position que l'on va chercher le plot correspondant à la nouvelle date (nouvelle observation). Comme le modèle de mouvement n'est pas parfait et peut changer si la cible manoeuvre, on donne une latitude au module d'association pour effectuer sa recherche. C'est la zone d'association définie par un rayon d'association autour de la position prédite.

Si dans cette zone d'association le module d'association ne trouve aucun plot détecté par le module de détection, il regarde le niveau k de complexité dans la zone sur laquelle se trouve la position prédite du plot, comme déterminé à l'image précédente par le module de prédiction. Cette zone est donnée par le processus de décomposition de l'image du module de détection.

Si k=1, indiquant un fond simple, le processus s'arrête. Il n'y a pas de plot détecté, et donc pas de plot associé à la piste PV pour cette observation.

Si k est supérieur à 1, il sélectionne un seuil de détection adapté $th_{da}$, correspondant au niveau k de complexité de cette zone, et applique ce seuil adapté en entrée du module de détection, pour une application locale sur la zone d'association considérée. Le module de détection envoie en retour, le résultat de la détection : zéro, un ou des plots fantômes $pf_i$.

Ainsi, l'utilisation du critère de complexité du fond local des plots, permet de façon avantageuse de rendre le module d'association de plots aux pistes validées plus robuste. Le risque de décrochage de piste est diminué.

L'invention améliore les performances du module de pistage d'un système de veille optronique, en exploitant les informations radiométriques sur les images, pour définir des niveaux de complexité de zones homogènes de l'image.

De manière plus détaillée, pour déterminer le seuil de détection adapté $th_{da}$ aux conditions de la détection, on applique le processus suivant :

- La table des plots associés à la piste validée fournit une valeur moyenne $S_m$ du signal radiométrique de la cible correspondante.

En effet pour un plot $pl_i$, on connaît le signal radiométrique S mesuré, transmis par le module de détection.

Le signal moyen $S_m$ associé à la cible est donc donné par :

$$S_m = \sum_N s_i$$ ,où N est le nombre maximum de plots gardés en table mémoire pour la piste considérée.

La valeur $S_m$ est recalculée à chaque fois qu'un nouveau plot est associé à la piste.

Cette valeur peut être utilisée par le module de prédiction pour prédire le rapport signal sur bruit que devrait avoir un plot de cette piste dans l'image suivante. On note RSBp cette prédiction.

En effet, le module de prédiction fournit une prédiction de position. Il est donc capable de prédire la zone homogène $Z_{i'}$ sur lequel se trouve cette prédiction. Comme on connaît la valeur moyenne du signal de cible $S_m$, et la moyenne et l'écart type du signal radiométrique sur la zone $Z_{i'}$, on en déduit le rapport signal sur bruit prédit dans la future observation :

$$RSB_{P_i} = \frac{S_m \times m_{Z_i'}}{\sigma_{Z_i'}}$$

La taille de fenêtre (ou le niveau de complexité k) associée à cette zone $Z_{i'}$ est connue de l'observation précédente.

De ces différentes informations, on est capable de déterminer un seuil de détection $th_{da}$ adapté, pour être capable de détecter un rapport signal sur bruit correspondant au rapport signal sur bruit prédit RSBp de la cible, en utilisant les équations classiques de densité de probabilité de détection (figures 7 et 8) habituellement utilisées pour la détermination de seuil de détection. Le seuil $th_{da}$ de détection est de préférence déterminé pour obtenir une probabilité de détection du plot recherché proche de 100%, dans la zone d'association ouverte. Le plot détecté par ce procédé est appelé plot fantôme.

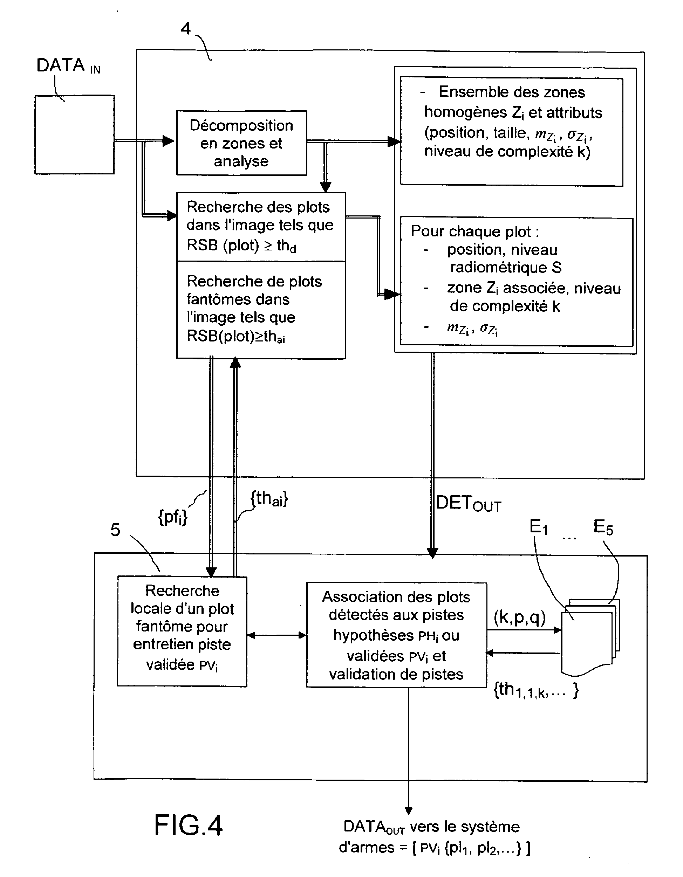

A chaque fois que nécessaire, le module de pilotage vient piloter le module de détection pour qu'il applique localement un seuil adapté $th_{da}$, dans une zone d'association déterminée $Z_{ai}$, correspondant à la recherche d'un plot pour une piste validée $PV_i$, (Figure 4).

Le module de détection ainsi piloté, va regarder le rapport signal sur bruit en chaque pixel de cette zone d'association $Z_{ai}$ pour le comparer, pixel après pixel, au seuil de détection adapté $th_{da}$. S'il détecte un plot fantôme $pf_i$, il envoie les attributs de ce plot fantôme au module d'association, qui peut associer ce plot à la piste validée $PV_i$.

Le principe de détection des plots fantômes, pour les pistes validées peut encore se comprendre de la façon suivante : On sait sur quelle zone $Z_{i'}$, on fait la détection. Si cette zone a un niveau de complexité élevé, la détection se fait en réalité sur une petite zone de voisinage uniforme de l'image, et donc les erreurs sur la moyenne et l'écart type calculés pour cette zone sont grandes (dû au faible nombre de pixels de la zone considéré). Le rapport signal sur bruit RSB calculé est donc sous-estimé. Pour détecter un plot permettant l'association avec la piste validée, il faut donc abaisser le seuil de détection localement sur cette zone, pour garantir la même probabilité de détection que celle qui aurait été obtenue pour le même RSBp prédit, mais sur un fond plus simple.

Ainsi, la mise en oeuvre de ce procédé permet via la fonction de prédiction de prédire le type de fond sur lequel se trouvera une piste à une date ultérieure (l'observation suivante). En utilisant cette information, le pistage est capable de prévoir la future perte de probabilité de détection sur les fonds complexes, et d'y remédier en pilotant localement un seuil de détection adapté, permettant l'entretien des pistes.

Ainsi dans un premier aspect de l'invention, le niveau de complexité associé à chacune des zones de l'image observée permet de définir un jeu de seuils de comparaison applicable pour valider une piste hypothèse, qui permet de rendre le critère de validation adaptatif et dynamique, en fonction des conditions locales de détection des plots, du nombre p de plots de la piste hypothèse et du nombre q d'observations.

Dans un deuxième aspect de l'invention, le niveau de complexité associé à chacune des zones de l'image observée permet d'adapter localement le seuil de détection, pour détecter un plot correspondant à une piste validée, en fonction du niveau de complexité de la zone sur lequel se situe la prédiction de position de ce plot.

Ainsi, le module de pistage s'adapte aux conditions de détection rencontrées dans les différentes zones des images fournies par les senseurs de surveillance optronique. Il prend en compte les caractéristiques radiométriques du fond local sur lequel évoluent les plots extraits par le module de détection, afin d'adapter les critères de validation de pistes hypothèses, et d'entretien des pistes validées.

Les différents aspects de l'invention sont présentés de façon schématique sur les figures 4 et 5.

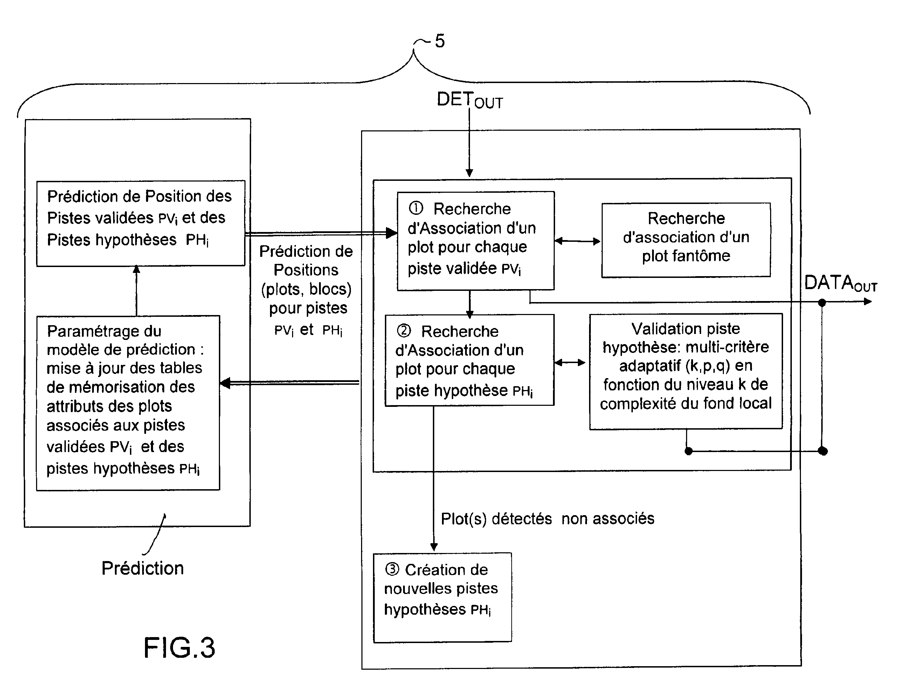

Sur la figure 3, les trois traitements effectués par le module de pistage sont présentés : en premier lieu, le module de pistage s'intéresse aux pistes déjà validées $PV_i$. C'est dans cet étage d'association aux pistes validées, que le module de pistage commande le module de détection pour la recherche de plots fantômes par abaissement local du seuil de détection, en utilisant les informations fournies par le module de prédiction.

En deuxième lieu, le module de pistage s'intéresse aux pistes hypothèses $PH_i$. C'est dans cet étage que le module de pistage met en oeuvre le critère adaptatif et dynamique, utilisant les ensembles de seuils de comparaison déterminés en fonction de la complexité locale du fond sur lequel les plots considérés dans cet étage ont été détectés, pour décider de la validation d'une piste hypothèse.

Enfin, en troisième lieu, le module de pistage s'intéresse aux plots détectés non attribués aux deux étapes précédentes, pour créer de nouvelles pistes hypothèses.

Par ailleurs, le module de pistage comprend un module de prédiction, qui effectue les traitements adaptés (filtrage de Kalman) pour déterminer pour les pistes hypothèses et les pistes validées, leur position future.

Sur la figure 4, on a repris le schéma-bloc de la figure 3 concernant le module de détection, et on l'a complété par un schéma-bloc simplifié du module de pistage 5, en indiquant les entrées/sorties de chacun. En particulier, les données de sortie $DET_{OUT}$ du module de détection appliquées en entrées du module de pistage comprennent les attributs des plots mais aussi des zones Z.

Le module de pistage pilote en outre l'étage de détection du module de détection 4, pour appliquer localement un seuil de détection adapté th$_{dai}$, dans une zone déterminée z$_{ai}$, dans le but de détecter des plots fantômes pf$_i$.

Enfin, les ensembles de seuils E$_k$ utilisés dans le module de pistage, par l'étage d'association des pistes hypothèses du module de pistage, pour la validation de ces pistes, sont représentés symboliquement, sous forme de tables.

La mise en oeuvre de l'invention dans un traitement d'image optronique, pour détecter et suivre des pistes de cibles ponctuelles, permet par la prise en compte du niveau de complexité du fond local sur lequel est détectée une cible ponctuelle, de valider plus rapidement les pistes hypothèses pour lesquels les plots détectés sont à fort contraste. Il permet en outre la détection de plots fantômes, aux fins exclusives de suivi des pistes validées, par l'abaissement du seuil de détection de plot, localement, dans une zone de l'image complexe dans laquelle devrait se situe la cible.

Une utilisation avantageuse de l'invention applique la modélisation de la complexité du fond local au moyen du critère de complexité k, associé à un critère de distribution radiométrique uniforme, qui permet de pré-calculer les ensembles E$_k$. Mais elle s'applique plus généralement à toutes les techniques de découpage d'image en zones homogènes.

## Revendications

1. Procédé de traitement d'images optronique, pour assurer la détection de cibles ponctuelles et le suivi de la piste de chaque cible détectée dans lesdites images, par création et validation de pistes hypothèses à partir de plots détectés dans une image observée, une piste hypothèse comprenant au moins un plot détecté, ledit procédé comprenant pour chaque image observée,
une étape de détection (4) de plots dans l'image, comprenant
une partition de l'image observée en une pluralité de zones homogènes, une zone homogène étant une zone sur laquelle est vérifié un critère d'uniformité défini par une fonction de distribution radiométrique déterminée,
le calcul pour chaque pixel de l'image observée d'un rapport signal sur bruit (RSB) correspondant relativement à la zone homogène dans lequel ledit pixel se trouve, et la comparaison du rapport signal sur bruit calculé à un seuil de détection (thd), tel qu'un plot est détecté pour un pixel de l'image si le rapport signal sur bruit calculé pour ce pixel est supérieur ou égal au dit seuil de détection,
et pour chaque plot détecté, la détermination d'un ensemble (Ek) de seuils de comparaison associé au dit plot, ledit ensemble comprenant un ou une pluralité de seuils, lesdits seuils de comparaison étant supérieurs ou égaux au dit seuil de détection (thd),
une étape de validation de pistes hypothèses comprenant pour chaque plot détecté, une étape d'application d'un critère de validation de la piste hypothèse associée au dit plot, ledit critère de validation étant fonction des seuils de comparaison associés à chacun des plots de la piste hypothèse.

2. Procédé selon la revendication 1, **caractérisé en ce que** ladite étape de détermination de seuils de comparaison associés à un plot est fonction du fond local défini par la zone homogène sur lequel ledit plot a été détecté.

3. Procédé selon la revendication 1 ou 2, **caractérisé en ce que** ladite étape de détermination de seuils de comparaison associés à un plot comprend la détermination d'un seuil de comparaison applicable en fonction d'un nombre i de plots de la piste hypothèse sur lesquels le critère de validation est appliqué.

4. Procédé selon la revendication 3, **caractérisé en ce que** si la piste hypothèse comprend p plots, le critère de validation consiste à vérifier s'il existe i plots, i=1 à p, tels que pour chaque plot parmi les i plots, le apport signal sur bruit (RSB) est supérieur au seuil de comparaison applicable pour i plots.

5. Procédé selon l'une quelconque des revendications 1 à 4, **caractérisé en ce qu'**il comprend pour chaque zone homogène (Z$_i$) de l'image, le calcul d'une moyenne ($m_{Z_i}$) et un écart type ($\sigma_{Z_i}$) des niveaux radiométriques des pixels sur ladite zone, permettant le calcul du rapport signal sur bruit en chaque pixel de l'image observée relativement à la zone homogène dans laquelle il se trouve, donné par $RSB = \dfrac{S - m_{Z_i}}{\sigma_{Z_i}}$, où S est le niveau du signal radiométrique du pixel considéré.

6. Procédé selon l'une quelconque des revendications 1 à 5, **caractérisé en ce que** la partition de l'image en zones homogènes comprend l'application d'une étape de détermination d'une zone homogène (Z$_i$) pour chaque pixel de l'image observée, correspondant à une recherche d'une zone de l'image la plus grande possible autour du pixel, hors le pixel, sur laquelle ledit critère d'uniformité de distribution radiométrique est vérifié, ladite zone homogène ($Z_i$) ainsi définie étant appelée plus grande zone de voisinage autour dudit pixel.

**7.** Procédé selon la revendication 6, **caractérisé en ce que** ladite étape de détermination de la plus grande zone de voisinage autour dudit pixel, applique une modélisation par taille TFk de fenêtre, correspondant à un niveau de complexité k de fond local, ladite modélisation comprenant la définition de t tailles de fenêtre, la détermination de la dite plus grande zone de voisinage autour d'un pixel consistant à déterminer la taille la plus grande de fenêtre sur laquelle ledit critère d'uniformité est vérifié, et la définition d'un critère de complexité k de fond local associé à chaque taille de fenêtre, k variant de 1 à t, tel qu'il est égal à 1 pour la fenêtre de taille la plus grande et à t pour la fenêtre de taille la plus petite, et **en ce qu'**à chaque plot détecté on associe le niveau de complexité k correspondant à la taille de fenêtre $TF_k$ de ladite plus grande zone de voisinage ainsi déterminée.

**8.** Procédé selon la revendication 7, **caractérisé en ce qu'**un ensemble de seuils de comparaison ($E_k$) est déterminé pour chaque niveau de complexité k de fond local, chaque ensemble ($E_k$) comprenant $\dfrac{P \times Q}{2}$ seuils $th_{i,j,k}$, avec i=1 à P et j=1 à Q, avec i$\leq$j, où P représente un nombre maximum de plots associés et Q un nombre maximum d'observations.

**9.** Procédé selon la revendication 8, **caractérisé en ce que** chaque ensemble de seuils de comparaison ($E_k$) définit, pour un nombre q d'observations courantes, un sous-ensemble de q seuils de comparaison $th_{i,q,k}$, i=1 à q, avec

$$th_{1,q,k} > th_{2,q,k} > th_{3,q,k,....} > th_{i,q,k} > ... > th_{q,q,k}.$$

**10.** Procédé selon la revendication 9, **caractérisé en ce qu'**il consiste, lorsqu'un p-ième plot d'une piste hypothèse PH a été détecté à la q-ième observation :

- dans les ensembles de seuils de comparaison ($E_k$) indexés par les niveaux de complexité k associés aux p plots de la piste hypothèse ($PH_i$), à sélectionner les sous-ensembles en fonction du nombre q d'observations ;
- à initialiser une boucle de comparaison avec i=1, cette boucle consistant dans les étapes suivantes :

-a). sélection des seuils $th_{i,q,k}$, d'index i, dans les sous-ensembles sélectionnés et application du critère suivant :

■ S'il existe i plots parmi les p plots de la piste hypothèse PH tels que chaque plot parmi ces i plots vérifie l'inégalité suivante : RSB $\geq$ $th_{i,q,k}$ pour la valeur du niveau de complexité k associé à ce plot.

• Alors la piste est validée - fin de la boucle.

■ si non, étape b).

-b). i=i+1.

■ Tant que i$\leq$p, retour à l'étape a).
■ Sinon, étape c).

- c).si i>p, Alors la piste n'est pas validée

**11.** Procédé selon l'une quelconque des revendications précédentes, comprenant une étape de prédiction d'une position d'un plot d'une piste dans l'image observée suivante, ladite prédiction comprenant la prédiction d'une zone homogène associée.

**12.** Procédé selon la revendication précédente, dans le cas où aucun plot n'est détecté dans l'image observée courante pour une piste hypothèse donnée, le procédé comprenant une étape de comparaison du nombre p de plots d'une piste hypothèse et d'un nombre q d'observations effectuées depuis le premier plot associé à la dite piste hypothèse, à des valeurs optimales prédéfinies, respectivement un nombre maximum de plots P à comparer à la valeur p et un nombre maximum d'observations Q à comparer à la valeur q, pour valider ladite piste hypothèse en fonction de l'écart auxdites valeurs optimales et en fonction du niveau de complexité k associé à la zone de prédiction de position de plot dans l'image courante.

13. Procédé selon la revendication 11 ou 12, comprenant une étape supplémentaire d'association de plots à une piste validée (PV$_i$), où dans le cas où aucun plot n'est détecté dans l'image observée courante pour une piste validée (PV$_i$) donnée, ladite étape comprend le contrôle du seuil de détection dans l'étape de détection (4), pour l'adapter localement en fonction du niveau de complexité k associé à une zone de prédiction de position de plot pour la piste validée considérée.

14. Système de surveillance optronique comprenant un ou une pluralité de senseurs optroniques aptes à fournir des images d'observation d'une scène, le système comprenant des moyens de traitement des dites images mettant en oeuvre un procédé selon l'une quelconque des revendications précédentes.

**Claims**

1. Method of optronic processing of images, to ensure the detection of pointlike targets and the following of the track of each target detected in the said images, by creating and validating hypothesis tracks on the basis of plots detected in an observed image, a hypothesis track comprising at least one detected plot, the said method comprising for each observed image,
a step (4) of detecting plots in the image, comprising
a partition of the image observed into a plurality of homogeneous zones, a homogeneous zone being a zone on which a uniformity criterion defined by a determined radiometric distribution function is satisfied,
the calculation for each pixel of the image observed of a corresponding signal-to-noise ratio (SNR) relatively to the homogeneous zone in which the said pixel is situated, and the comparison of the signal-to-noise ratio calculated with a detection threshold (thd), such that a plot is detected for a pixel of the image if the signal-to-noise ratio calculated for this pixel is greater than or equal to the said detection threshold,
and for each plot detected, the determination of a set (Ek) of comparison thresholds which is associated with the said plot, the said set comprising one or more thresholds, the said comparison thresholds being greater than or equal to the said detection threshold (thd),
a step of validating hypothesis tracks comprising for each plot detected, a step of applying a criterion for validating the hypothesis track associated with the said plot, the said criterion of validation being dependent on the comparison thresholds associated with each of the plots of the hypothesis track.

2. Method according to Claim 1, **characterized in that** the said step of determining comparison thresholds associated with a plot is dependent on the local background defined by the homogeneous zone on which the said plot has been detected.

3. Method according to Claim 1 or 2, **characterized in that** the said step of determining comparison thresholds associated with a plot comprises the determination of a comparison threshold applicable as a function of a number i of plots of the hypothesis track to which the criterion of validation is applied.

4. Method according to Claim 3, **characterized in that** if the hypothesis track comprises p plots, the criterion of validation consists in verifying whether there exist i plots, i=1 to p, such that for each plot out of the i plots, the signal-to-noise ratio (RSB) is greater than the comparison threshold applicable for i plots.

5. Method according to any one of Claims 1 to 4, **characterized in that** it comprises for each homogeneous zone (Z$_i$) of the image, the calculation of a mean ($m_{z_i}$) and a standard deviation ($\sigma_{z_i}$) of the radiometric levels of the pixels on the said zone, allowing the calculation of the signal-to-noise ratio at each pixel of the image observed relatively to the homogeneous zone in which it is situated, given by $RSB = \dfrac{S - m_{z_i}}{\sigma_{z_i}}$ where S is the level of the radiometric signal of the pixel considered.

6. Method according to any one of Claims 1 to 5, **characterized in that** the partition of the image into homogeneous zones comprises the application of a step of determining a homogeneous zone ($Z_i$) for each pixel of the image observed, corresponding to a search of a zone of the image which is as large as possible around the pixel, apart from the pixel, on which the said radiometric distribution uniformity criterion is satisfied, the said homogeneous zone ($Z_i$) thus defined being called the largest zone of neighbourhood around the the said pixel.

**7.** Method according to Claim 6, **characterized in that** the said step of determining the largest zone of neighbourhood around the said pixel, applies a modelling by size $T_{Fk}$ of window, corresponding to a level of complexity k of local background, the said modelling comprising the definition of t window sizes, the determination of the said largest zone of neighbourhood around a pixel consisting in determining the largest size of window on which the said uniformity criterion is satisfied, and the definition of a criterion of complexity k of local background associated with each size of window, k varying from 1 to t, such that it is equal to 1 for the window of largest size and to t for the window of smallest size, and **in that** with each plot detected is associated the level of complexity k corresponding to the size of window $TF_k$ of the said largest zone of neighbourhood thus determined.

**8.** Method according to Claim 7, **characterized in that** a set of comparison thresholds ($E_k$) is determined for each level of complexity k of local background, each set ($E_k$) comprising $\dfrac{P \times Q}{2}$ thresholds $th_{i,j,k}$, with i = 1 to P and j = 1 to Q, with i $\leq$ j, where P represents a maximum number of associated plots and Q a maximum number of observations.

**9.** Method according to Claim 8, **characterized in that** each set of comparison thresholds ($E_k$) defines, for a number q of current observations, a subset of q comparison thresholds $th_{i,q,k}$, i=1 to q, with $th_{1,q,k} > th_{2,q,k} > th_{3,q,k} > ..... > th_{i,q,k} > ... > th_{q,q,k}$.

**10.** Method according to Claim 9, **characterized in that** it consists, when a p-th plot of a hypothesis track PH has been detected at the q-th observation:

- from the sets of comparison thresholds ($E_k$) indexed by the levels of complexity k associated with the p plots of the hypothesis track ($PH_i$), in selecting the subsets as a function of the number q of observations;
- In initializing a comparison loop with i=1, this loop consisting in the following steps:

-a). selection of the thresholds $th_{i,q,k}$, of index i, in the selected subsets and application of the following criterion:

■ If there exist i plots out of the p plots of the hypothesis track PH such that each plot out of these i plots satisfies the following inequality: SNR $\geq th_{i,q,k}$ for the value of the level of complexity k associated with this plot.

• Then the track is validated - end of the loop.

■ if not, step b).

-b). i=i+1.

■ While i$\leq$p, return to step a).
■ Else, step c).

- c).if i>p, Then the track is not validated

**11.** Method according to any one of the preceding claims, comprising a step of predicting a position of a plot of a track in the next observed image, the said prediction comprising the prediction of an associated homogeneous zone.

**12.** Method according to the preceding claim, in the case where no plot is detected in the current observed image for a given hypothesis track, the method comprising a step of comparison of the number p of plots of a hypothesis track and of a number q of observations performed since the first plot associated with the said hypothesis track, with predefined optimal values, respectively a maximum number of plots P to be compared with the value p and a maximum number of observations Q to be compared with the value q, so as to validate the said hypothesis track as a function of the deviation at the said optimal values and as a function of the level of complexity k associated with the plot position prediction zone in the current image.

13. Method according to Claim 11 or 12, comprising an additional step of associating plots with a validated track ($PV_i$), wherein in the case where no plot is detected in the current observed image for a given validated track ($PV_i$), the said step comprises the checking of the detection threshold in the detection step (4), so as to adapt it locally as a function of the level of complexity k associated with a plot position prediction zone for the validated track considered.

14. System of optronic surveillance comprising one or a plurality of optronic sensors able to provide images for observing a scene, the said system comprising means of processing of the said images implementing a method according to any one of the preceding claims.

**Patentansprüche**

1. Optronisches Bildverarbeitungsverfahren, um die Erfassung von punktförmigen Zielen und die Verfolgung der Spur jedes erfassten Ziels in den Bildern zu gewährleisten, durch Erzeugung und Validierung von Hypothese-Spuren ausgehend von in einem beobachteten Bild erfassten Einzelpunkten, wobei eine Hypothese-Spur mindestens einen erfassten Einzelpunkt enthält, wobei das Verfahren für jedes beobachtete Bild enthält

   einen Schritt der Erfassung (4) von Einzelpunkten im Bild, der enthält

   eine Aufteilung des beobachteten Bilds in mehrere homogene Zonen, wobei eine homogene Zone eine Zone ist, in der ein Gleichförmigkeitskriterium erfüllt ist, das durch eine bestimmte radiometrische Verteilungsfunktion definiert wird,

   die Berechnung, für jedes Pixel des beobachteten Bilds, eines entsprechenden Signal/Rausch-Verhältnisses (RSB) bezüglich der homogenen Zone, in der sich das Pixel befindet, und der Vergleich des berechneten Signal/Rausch-Verhältnisses mit einer Erfassungsschwelle (thd), derart, dass ein Einzelpunkt für ein Pixel des Bilds erfasst wird, wenn das für dieses Pixel berechnete Signal/Rausch-Verhältnis höher als die oder gleich der Erfassungsschwelle ist, und für jeden erfassten Einzelpunkt die Bestimmung einer dem Einzelpunkt zugeordneten Einheit (Ek) von Vergleichsschwellen, wobei die Einheit eine oder mehrere Schwellen enthält, wobei die Vergleichsschwellen höher als die oder gleich der Erfassungsschwelle (thd) sind,

   einen Schritt der Validierung von Hypothese-Spuren, der für jeden erfassten Einzelpunkt einen Schritt der Anwendung eines Validierungskriteriums der dem Einzelpunkt zugeordneten Hypothese-Spur enthält, wobei das Validierungskriterium von den jedem der Einzelpunkte der Hypothese-Spur zugeordneten Vergleichsschwellen abhängt.

2. Verfahren nach Anspruch 1, **dadurch gekennzeichnet, dass** der Schritt der Bestimmung von einem Einzelpunkt zugeordneten Vergleichsschwellen von dem lokalen Hintergrund abhängt, der von der homogenen Zone definiert wird, in der der Einzelpunkt erfasst wurde.

3. Verfahren nach Anspruch 1 oder 2, **dadurch gekennzeichnet, dass** der Schritt der Bestimmung von einem Einzelpunkt zugeordneten Vergleichsschwellen die Bestimmung einer Vergleichsschwelle enthält, die in Abhängigkeit von einer Anzahl i von Einzelpunkten der Hypothese-Spur anwendbar ist, an die das Validierungskriterium angewendet wird.

4. Verfahren nach Anspruch 3, **dadurch gekennzeichnet, dass**, wenn die Hypothese-Spur p Einzelpunkte enthält, das Validierungskriterium darin besteht, zu überprüfen, ob es i Einzelpunkte gibt, i=1 bis p, derart, dass für jeden Einzelpunkt unter den i Einzelpunkten das Signal/Rausch-Verhältnis (RSB) höher als die Vergleichsschwelle ist, die für i Einzelpunkte anwendbar ist.

5. Verfahren nach einem der Ansprüche 1 bis 4, **dadurch gekennzeichnet, dass** es für jede homogene Zone ($Z_i$) des Bilds die Berechnung eines Mittelwerts ($m_{z_i}$) und eine Standardabweichung ($\sigma_{z_i}$) der radiometrischen Pegel der Pixel in der Zone enthält, was die Berechnung des Signal/Rausch-Verhältnisses in jedem Pixel des beobachteten Bilds bezüglich der homogenen Zone erlaubt, in der es sich befindet, angegeben durch $RSB = \dfrac{S - m_{z_i}}{\sigma_{z_i}}$, wobei S der Pegel des radiometrischen Signals des betrachteten Pixels ist.

6. Verfahren nach einem der Ansprüche 1 bis 5, **dadurch gekennzeichnet, dass** die Aufteilung des Bilds in homogene Zonen die Anwendung eines Schritts der Bestimmung einer homogenen Zone ($Z_i$) für jedes Pixel des beobachteten Bilds enthält, die einer Suche nach einer größtmöglichen Zone des Bilds um das Pixel herum außerhalb des Pixels entspricht, in der das Gleichförmigkeitskriterium der radiometrischen Verteilung erfüllt ist, wobei die so definierte homogene Zone ($Z_i$) größte Umgebungszone um das Pixel herum genannt wird.

**7.** Verfahren nach Anspruch 6, **dadurch gekennzeichnet, dass** der Schritt der Bestimmung der größten Umgebungszone um das Pixel herum eine Modellierung pro Fenstergröße TFk anwendet, entsprechend einer lokalen Hintergrunds-Komplexitätsebene k, wobei die Modellierung die Definition von t Fenstergrößen enthält, wobei die Bestimmung der größten Umgebungszone um ein Pixel herum darin besteht, die größte Fenstergröße zu bestimmen, in der das Gleichförmigkeitskriterium erfüllt ist, und die Definition eines lokalen Hintergrunds-Komplexitätskriteriums k enthält, das jeder Fenstergröße zugeordnet ist, wobei k von 1 bis t variiert, derart, dass es für das Fenster größter Größe gleich 1 und für das Fenster kleinster Größe gleich t ist, und dass jedem erfassten Einzelpunkt die Komplexitätsebene k zugeordnet wird, die der Fenstergröße TFk der so bestimmten größten Umgebungszone entspricht.

**8.** Verfahren nach Anspruch 7, **dadurch gekennzeichnet, dass** eine Einheit von Vergleichsschwellen ($E_k$) für jede lokale Hintergrunds-Komplexitätsebene k bestimmt wird, wobei jede Einheit ($E_k$) $\dfrac{PxQ}{2}$ Schwellen $th_{i,j,k}$ enthält, mit i=1 bis P und j=1 bis Q, mit i≤j, wobei P eine maximale Anzahl von zugeordneten Einzelpunkten und Q eine maximale Anzahl von Beobachtungen darstellt.

**9.** Verfahren nach Anspruch 8, **dadurch gekennzeichnet, dass** jede Einheit von Vergleichsschwellen ($E_k$) für eine Anzahl q von laufenden Beobachtungen eine Untereinheit von q Vergleichsschwellen $th_{i,q,k}$ definiert, i=1 bis q, mit $th_{1,q,k} > th_{2,q,k} > th_{3,q,k} ... > th_{i,q,k} > ... > th_{q,q,k}$.

**10.** Verfahren nach Anspruch 9, **dadurch gekennzeichnet, dass** es, wenn ein p-ter Einzelpunkt einer Hypothese-Spur PH bei der q-ten Beobachtung erfasst wurde, darin besteht:

- in den Einheiten von Vergleichsschwellen ($E_k$), die mit den Komplexitätsebenen k indexiert sind, die den p Einzelpunkten der Hypothese-Spur ($PH_i$) zugeordnet sind, die Untereinheiten in Abhängigkeit von der Anzahl q von Beobachtungen auszuwählen;
- eine Vergleichsschleife mit i=1 zu initialisieren, wobei diese Schleife aus den folgenden Schritten besteht:

-a). Auswahl der Schwellen $th_{i,q,k}$ mit dem Index i in den ausgewählten Untereinheiten und Anwendung des folgenden Kriteriums:

■ wenn es i Einzelpunkte unter den p Einzelpunkten der Hypothese-Spur PH gibt, derart, dass jeder Einzelpunkt unter diesen i Einzelpunkten die folgende Ungleichheit erfüllt: RSB ≥ $th_{i,q,k}$ für den Wert der diesem Einzelpunkt zugeordneten Komplexitätsebene k,

• wird die Spur validiert - Ende der Schleife,

■ sonst Schritt b),

-b). i=i+1,

■ so lange gilt i≤p, Rückkehr zum Schritt a),
■ sonst Schritt c),

-c). wenn gilt i>p, wird die Spur nicht validiert.

**11.** Verfahren nach einem der vorhergehenden Ansprüche, das einen Schritt der Vorhersage einer Position eines Einzelpunkts einer Spur im folgenden beobachteten Bild enthält, wobei die Vorhersage die Vorhersage einer zugeordneten homogenen Zone enthält.

**12.** Verfahren nach dem vorhergehenden Anspruch für den Fall, in dem kein Einzelpunkt in dem laufenden beobachteten Bild für eine gegebene Hypothese-Spur erfasst wird, wobei das Verfahren einen Schritt des Vergleichs der Anzahl p von Einzelpunkten einer Hypothese-Spur und einer Anzahl q von Beobachtungen, die ausgehend vom ersten der Hypothese-Spur zugeordneten Einzelpunkt ausgeführt werden, mit vordefinierten optimalen Werten enthält, einer maximalen Anzahl von mit dem Wert p zu vergleichenden Einzelpunkten P bzw. einer maximalen Anzahl Q von mit dem Wert q zu vergleichenden Beobachtungen, um die Hypothese-Spur in Abhängigkeit von der Abweichung von den optimalen Werten und in Abhängigkeit von der Komplexitätsebene k zu validieren, die der Zone der Positionsvorhersage eines Einzelpunkts im laufenden Bild zugeordnet ist.

13. Verfahren nach Anspruch 11 oder 12, das einen zusätzlichen Schritt der Zuordnung von Einzelpunkten zu einer validierten Spur ($PV_i$) enthält, bei dem in dem Fall, in dem kein Einzelpunkt im laufenden beobachteten Bild für eine gegebene validierte Spur ($PV_i$) erfasst wird, der Schritt die Überwachung der Erfassungsschwelle im Erfassungsschritt (4) enthält, um sie lokal in Abhängigkeit von der einer Zone der Positionsvorhersage eines Einzelpunkts zugeordneten Komplexitätsebene k für die betrachtete validierte Spur anzupassen.

14. Optronisches Überwachungssystem, das einen oder mehrere optronische Sensoren enthält, die in der Lage sind, Beobachtungsbilder einer Szene zu liefern, wobei das System Einrichtungen zur Verarbeitung der Bilder enthält, die ein Verfahren nach einem der vorhergehenden Ansprüche anwenden.

FIG.1

EP 1 792 278 B1

DATA$_{IN}$

Décomposition
en zones et
analyse

Recherche des
plots dans
l'image tels que
RSB≥th$_d$

Pour chaque zone Z$_i$ de l'image :
- Taille et position
- niveau de bruit moyen $m_{Z_i}$ sur
  la fenêtre
- écart type $\sigma_{Z_i}$

Pour chaque plot :
- position, niveau radiométrique S
- $m_{Z_i}$ , $\sigma_{Z_i}$

pl$_2$

pl$_3$

pl$_1$

DET$_{OUT}$

4

FIG.2

FIG.3

EP 1 792 278 B1

DATA $_{IN}$

Décomposition en zones et analyse

- Ensemble des zones homogènes $Z_i$ et attributs (position, taille, $m_{Z_i}$, $\sigma_{Z_i}$, niveau de complexité k)

Recherche des plots dans l'image tels que RSB (plot) $\geq$ th$_d$

Recherche de plots fantômes dans l'image tels que RSB(plot)$\geq$th$_{ai}$

Pour chaque plot :
- position, niveau radiométrique S
- zone $Z_i$ associée, niveau de complexité k
- $m_{Z_i}$, $\sigma_{Z_i}$

4

{pf$_i$}   {th$_{ai}$}   DET$_{OUT}$

5

E$_1$  ...  E$_5$

Recherche locale d'un plot fantôme pour entretien piste validée PV$_i$

Association des plots détectés aux pistes hypothèses PH$_i$ ou validées PV$_i$ et validation de pistes

(k,p,q)

{th$_{1,1,k,...}$}

FIG.4

DATA$_{OUT}$ vers le système d'armes = [ PV$_i$ {pl$_1$, pl$_2$,...} ]

| Ek | | | | | | | | | | |
|---|---|---|---|---|---|---|---|---|---|---|
| q \ p | 1 | 2 | 3 | 4 | 5 | 6 | 7 | 8 | 9 | 10 |
| 1 | th(1,1,k) | th(1,2,k) | th(1,3,k) | th(1,4,k) | th(1,5,k) | th(1,6,k) | th(1,7,k) | th(1,8,k) | th(1,9,k) | th(1,10,k) |
| 2 | | th(2,2,k) | th(2,3,k) | th(2,4,k) | ... | ... | ... | ... | ... | th(2,10,k) |
| 3 | | | th(3,3,k) | th(3,4,k) | ... | ... | ... | ... | ... | th(3,10,k) |
| 4 | | | | th(4,4,k) | ... | ... | ... | ... | ... | th(4,10,k) |
| 5 | | | | | th(5,5,k) | ... | ... | ... | ... | th(5,10,k) |
| 6 | | | | | | th(6,6,k) | ... | ... | ... | th(6,10,k) |
| 7 | | | | | | | th(7,7,k) | ... | ... | th(7,10,k) |
| 8 | | | | | | | | th(8,8,k) | ... | th(8,10,k) |
| 9 | | | | | | | | | th(9,9,k) | th(9,10,k) |
| 10 | | | | | | | | | | th(10,10,k) |

FIG. 5

EP 1 792 278 B1

FIG.6

FIG.7

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **Chummun M R et al.** An adaptative early detection ML/PDA estimator for LO targets with EO sensors. *Aerospace proceedings,* 18 Mars 2000, vol. 3, ISBN 0-7803-5846-5, 449-464